(19) **Europäisches Patentamt / European Patent Office / Office européen des brevets**

(11) **EP 1 483 964 B1**

(12) **EUROPEAN PATENT SPECIFICATION**

(45) Date of publication and mention of the grant of the patent:
**07.03.2007 Bulletin 2007/10**

(51) Int Cl.:
***A01K 89/012*** *(2006.01)*

(21) Application number: **04253131.9**

(22) Date of filing: **27.05.2004**

(54) **Motor control device for motor driven reel**

Motorsteuerungsgerät für eine Angelrolle

Appareil pour la commande du moteur d'un moulinet de pêche

(84) Designated Contracting States:
**AT BE BG CH CY CZ DE DK EE ES FI FR GB GR HU IE IT LI LU MC NL PL PT RO SE SI SK TR**

(30) Priority: **02.06.2003 JP 2003157184**

(43) Date of publication of application:
**08.12.2004 Bulletin 2004/50**

(73) Proprietor: **SHIMANO INC.**
**Osaka 590-8577 (JP)**

(72) Inventor: **Kuriyama, Hiroaki**
**Sakai**
**Osaka 590-8577 (JP)**

(74) Representative: **Murnane, Graham John et al**
**Murgitroyd & Company**
**165-169 Scotland Street**
**Glasgow G5 8PL (GB)**

(56) References cited:
**GB-A- 1 210 983** **US-A- 5 004 181**
**US-A- 6 126 104**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

BACKGROUND OF THE INVENTION

Field of the Invention

The present invention relates to a motor control device for a motor driven reel, and more particularly to a motor control device for a motor driven reel that serves to control a motor that rotates a spool.

Background Information

Generally, a motor driven reel that rotates a spool during line winding by means of a motor is often used when fishing from a boat for fish that swim at a depth of 100 meters or greater. This type of motor driven reel includes a reel unit, a spool mounted on the reel unit, a handle that rotates the spool, and a motor that rotates the spool in the line winding direction. A case member on which a display for displaying water depth, switches for various inputs, and the like are arranged is mounted on the upper surface of the reel unit. In addition, a motor controller that serves to control the motor, a motor drive circuit that serves to PWM drive the motor, and the like are arranged in the interior of the case member.

There are times when the motor controller in this type of motor driven reel will malfunction due to noise generated by the motor commutator. Accordingly, it is known to provide a shield in the interior of the case member in order to block the noise from the exterior of the case member as shown in Published Utility Model Application H03-1149641. In this motor driven reel, noise can be blocked by applying an insulation coating made of an aluminum film or the like to the case member in which the motor controller is accommodated as the shield, or by using a filler that is embedded in the case member as the shield, and thus prevent malfunction of the motor controller.

With a conventional motor driven reel, malfunction of the motor controller is prevented by providing a shield in the interior of the case member. However, motor noise may have a harmful effect on an external device located outside the case member and not covered with a shield. For example, if the external device is a radio, a cellular telephone, or the like that is near the reel, it may be difficult to hear these external devices due to the noise, malfunctions may occur with the external devices, or other problems may occur with the external devices.

SUMMARY OF THE INVENTION

An object of the present invention is to prevent problems from being produced in external devices that are located near a motor controller of a motor driven reel.

A motor control device for a motor driven reel according to a first aspect of the present invention controls a motor that rotates a spool mounted on a reel unit, and includes a motor controller that is arranged on the reel unit and outputs drive signals to the motor, a motor drive that is connected to the motor and the motor controller and which drives the motor in response to the drive signals output from the motor controller, and a noise reduction element that is arranged on the motor or the motor drive and which reduces motor noise.

With this motor control device, noise generated by motor rotation can be reduced by arranging a noise reduction element on the motor or the motor drive. Because of this, problems with external devices placed near the motor driven reel will rarely occur.

The motor control device according to a second aspect of the present invention is the motor control device of the first aspect, in which the noise reduction element is built into the motor. In this configuration, by employing a motor that has a noise reduction element provided therein, problems with external devices that are placed near the motor driven reel will rarely occur, and conventional motor drive circuits and the like can be used.

The motor control device according to a third aspect of the present invention is the motor control device of the first or second aspect, in which the noise reduction element is arranged on the motor drive, and is connected in parallel to the motor. In this configuration, by providing the noise reduction element on the motor drive, problems with external devices that are placed near the motor driven reel will rarely occur, and the noise reduction element can be compactly assembled in one of the circuits of the motor drive.

The motor control device according to a fourth aspect of the present invention is the motor control device of any of first to third aspects, in which the noise reduction element is a varistor connected in parallel with the motor. In this configuration, the varistor 66 includes characteristics in which the resistance value is quickly reduced when a voltage that exceeds a predetermined value is applied, and thus can absorb a high surge in the voltage of the motor and the noise thereof, and can reduce the noise of the motor.

The motor control device according to a fifth aspect of the present invention is the motor control device of any of first to third aspects, in which the noise reduction element is a choke coil connected in parallel to the motor. In this configuration, the choke coil is a member that has a coil wound around a magnetic material, and can eliminate the noise of the motor by adjusting the waveform of the electrical current.

The motor control device according to a sixth aspect of the present invention is the motor control device of any of first to third aspects, in which the noise reduction element is a condenser in which one terminal thereof is connected to the motor, and another terminal thereof is connected to ground. In this configuration, motor noise can be reduced by arranging a condenser in the motor or the motor drive.

The motor control device according to a sevenrth aspect of the present invention is the motor control device of any of first to sixth aspects, in which the reel unit further includes a case member that accommodates at least any of the motor controller and the motor drive. In this configuration, the assembly of the reel can be improved by accommodating the motor controller or the motor drive in the case member.

These and other objects, features, aspects, and advantages of the present invention will become apparent to those skilled in the art from the following detailed description, which, taken in conjunction with the annexed drawings, discloses preferred embodiments of the present invention.

BRIEF DESCRIPTION OF THE DRAWINGS

Referring now to the attached drawings which form a part of this original disclosure:

Figure 1 is a plan view of a motor driven reel in which one embodiment of the present invention is adopted.
Figure 2 is a plan view of the vicinity of a display portion of the motor driven reel.
Figure 3 is a control block diagram of the motor driven reel.
Figure 4 is a figure showing the details of the data stored in a memory.
Figure 5 is a circuit diagram of a PWM drive circuit.
Figure 6 is a graph showing the relationship between the number of spool rotation and the length of fishing line per one spool rotation.
Figure 7 is a flowchart showing the main routine of the motor driven reel.
Figure 8 is a flowchart showing a switch input process subroutine.
Figure 9 is a flowchart showing a speed increase process subroutine.
Figure 10 is a flowchart showing a tension increase process subroutine.
Figure 11 is a flowchart showing a line winding diameter calculation process subroutine.
Figure 12 is a flowchart showing a speed decrease process subroutine.
Figure 13 is a flowchart showing a tension decrease process subroutine.
Figure 14 is a flowchart showing a various operation mode process subroutine.
Figure 15 is a perspective view of a choke coil.
Figure 16 is a view of another embodiment corresponding to Fig. 5.
Figure 17 is a view of another embodiment corresponding to Fig. 5.
Figure 18 is a view of another embodiment corresponding to Fig. 1.

DETAILED DESCRIPTION OF THE PREFERRED EMBODIMENTS

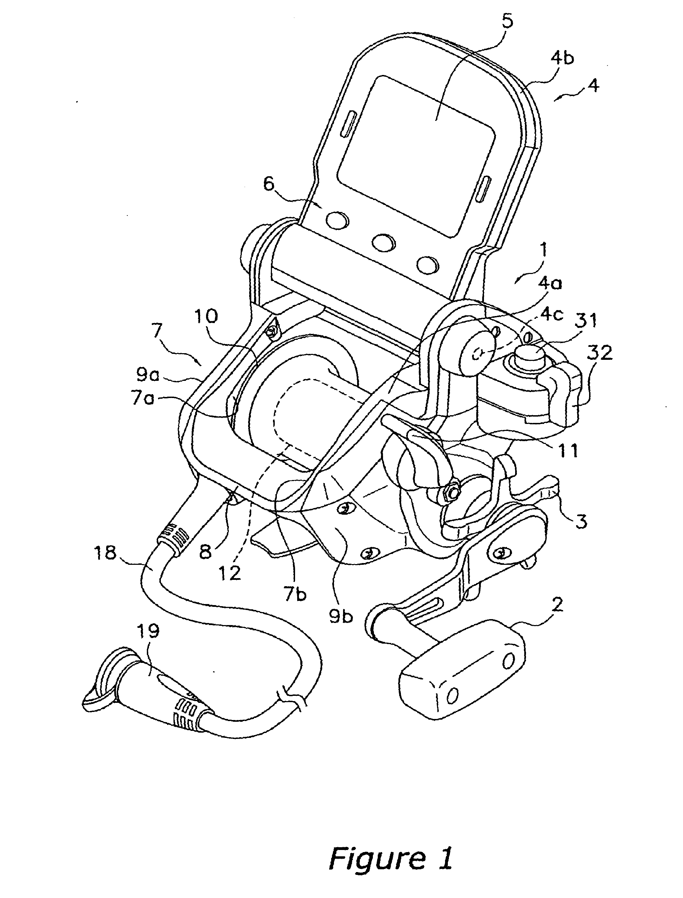

As shown in Fig. 1, a fishing reel in which one embodiment of the present invention has been adopted is a motor driven reel that rotatively drives a spool by means of a motor, and primarily includes a reel unit 1, a handle 2 for rotating the spool that is mounted on the side of the reel unit 1, a star drag 3 for adjusting the drag that is disposed on the reel unit 1 side of the handle 2, and an open/close type water depth display device 4 that is arranged on the upper portion of the reel unit 1.

The reel unit 1 includes a frame 7 having a pair of left to right oriented side plates 7a, 7b and a plurality of connecting members 8 that connect the side plates 7a, 7b to each other, and left to right oriented side covers 9a, 9b that cover the left and right sides of the frame 7. The rotation shaft of the handle 2 is rotatively supported by the side cover 9b on the handle 2 side. A reel cord 18 having a connector 19 for connecting to an external electrical source installed on the tip thereof extends out from the rear portion on the side cover 9a side of the connecting members 8 disposed on the rear of the reel unit 1.

As shown in Fig. 1, a spool 10 that is linked to the handle 2 is rotatively supported in the interior of the reel unit 1. A motor 12 that rotatively drives the spool 10 in a line winding direction is disposed in the interior of the spool 10. In addition, a clutch lever 11 that serves to operate a clutch mechanism (not shown in the figures) is disposed on a surface of the reel unit 1 on the handle 2 side. A motor switch 31 that serves to turn the motor 12 on and off, and a motor state change lever 32 that changes the rotational state of the motor 12, are arranged forward of the clutch lever 11 on handle 2 side surface of the reel unit 1.

The water depth display device 4 includes a first member 4a unitarily arranged with the reel unit 1, a second member 4b that is a case member that is arranged such that it can be opened and closed with respect to the first member 4a, and a connecting member 4c that pivotably connects the first member 4a and the second member 4b.

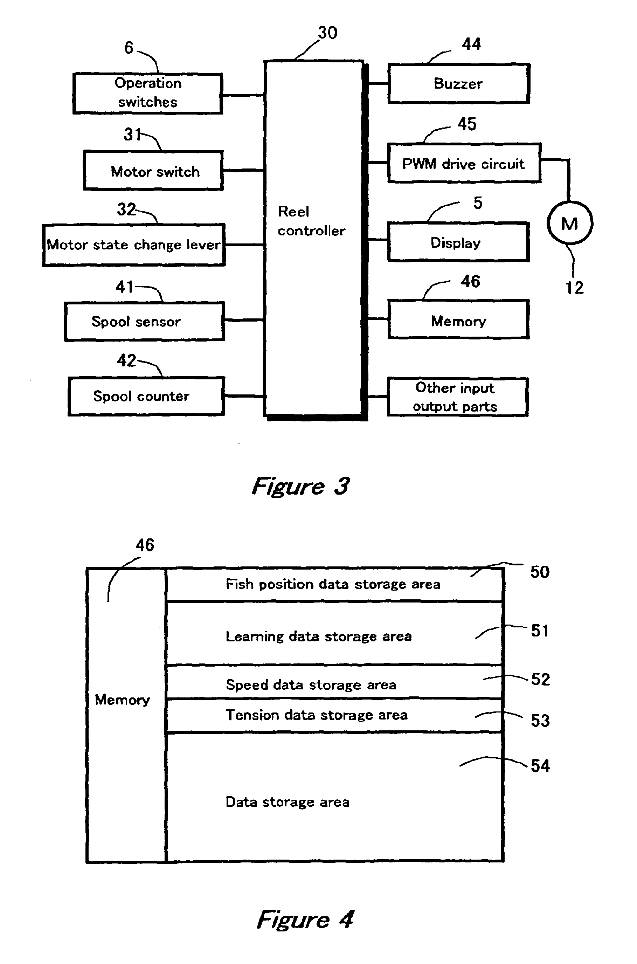

The first member 4a is unitarily formed with the reel unit 1 on both upper side portions of the reel unit 1. An accommodation space is included in the interior of the first member 4a, and a spool sensor 41 that serves to detect the rotational speed of the spool 10 is accommodated therein (see Fig. 3). In addition, a portion of a front end portion of the first member 4a projects upward in order to install the connecting member 4c thereon. An upper surface of the first member 4a is a flat surface having an height that is the same as both side portions, and inclines diagonally downward from the projecting portion that serves to install the connecting member 4c toward the rear.

The second member 4b is installed such that it can open and close with respect to the first member 4a. The installation portion of the second member 4b is shaped to correspond to the projecting portion of the first member 4a. The connecting member 4c is mounted in the installation portions of the first member 4a and the second member 4b. The second member 4b includes a display 5 that is disposed on a surface that faces the first member 4a, and operation switches 6 that are disposed near the display 5 and made up of a plurality of switches.

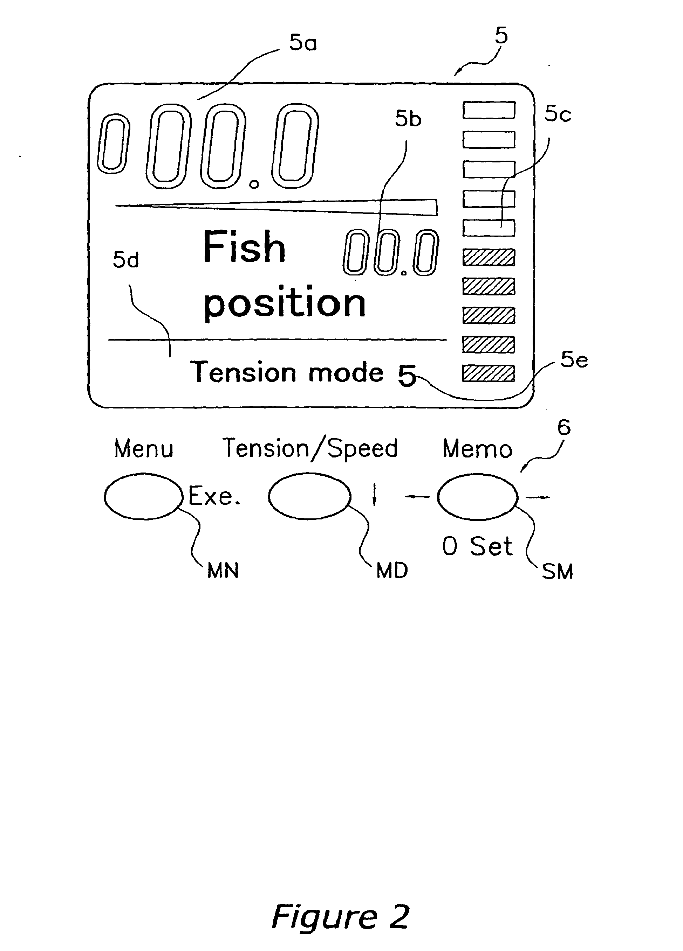

The display 5 is a dot matrix type of liquid crystal display that is arranged on the second member 4b and disposed on the surface thereof facing the first member 4a. As shown in the enlarged view of Fig. 2, during normal fishing, the display 5 displays the distance between the tackle and the water surface or the distance between the tackle and bottom of the body of water, as well as the distance between the location of the fish and the water surface or the distance between the location of the fish and bottom of the body of water. The display 5 includes a 4 digit water depth display area 5a in the central portion thereof, a three digit fish position depth display area 5b, a speed indication area 5c on the right side of the water depth display area 5a, a speed/tension mode display area 5d on the lowermost portion of the display 5, and a tension indication area 5e on the right side of the speed/tension mode display area 5d. In addition, because the display 5 is a dot matrix type of liquid crystal display, it can be switched between a variety of different displays such as, for example, a menu display for various settings, currently applied tension, and the like.

The operation switches 6 include a menu switch MN, a mode switch MD, and a bottom memo switch SM that are disposed from left to right near the pivot axis X of the connecting member 4c on the lower side of the display 5.

The menu switch MN is a switch that serves to set various menus. The mode switch MD is a switch that serves to set various modes, and switches for example between a constant tension mode and a constant speed mode that controls the rotation of the motor 12. The bottom switch SM is a switch that is pushed when the tackle arrives at the bottom of the body of water, and the water depth at this point is set as the bottom.

The motor switch 31 is arranged near the motor state change lever 32, and the motor 12 is turned on and off by pushing (moving) the motor switch 31 downward along the pivot axis of the motor state change lever 32.

The motor state change lever 32 includes two switches that serve to increase or reduce the speed or torque of the driven motor 12, and are arranged so that they can pivot forward and rearward. When the motor state change lever 32 is pivoted forward to the increase position, one switch is turned on and the rotational speed or torque of the motor 12 will increase, and when the motor state change lever is pivoted rearward to the decrease position, the other switch is turned on and the rotational speed or torque of the motor 12 will decrease. The motor state change lever 32 is continually urged toward the central position even if pivoted in either the increase direction or decrease direction.

In addition, as shown in Fig. 3, the motor driven reel includes a reel controller 30 that is accommodated inside the second member 4b and controls the display 5 and the motor 12. The reel controller 30 includes a microcomputer that includes a CPU, RAM, ROM, an I/O interface, and the like. The reel controller 30 carries out various control operations in accordance with a control program, such controlling the display 5 and controlling the motor drive. The reel controller 30 is connected to various switches such as the operation switch 6, the motor switch 31, the motor state change switch 32, and the like, as well as a spool sensor 41 and a spool counter 42. In addition, the reel controller 30 is connected to a buzzer 44, a PWM drive circuit 45 (pulse width modulation drive circuit), the display 5, memory 46, and other input/output units.

The spool sensor 41 is formed from two lead switches that are aligned from front to rear in the interior of the first member 4a, and the rotational direction of the spool 10 can be detected by means of the first detection pulse generated first by either of the lead switches. The spool counter 42 calculates the number of times the spool sensor 41 is turned on and off, and rotation position data related to the number of spool rotations is obtained by means of this calculated value. The number of rotations calculated by the spool counter 42 will decrease when the spool 10 rotates normally (rotates in the line releasing direction), and will increase when the spool 10 rotates in the opposite direction. The buzzer 44 is used to produce a warning sound.

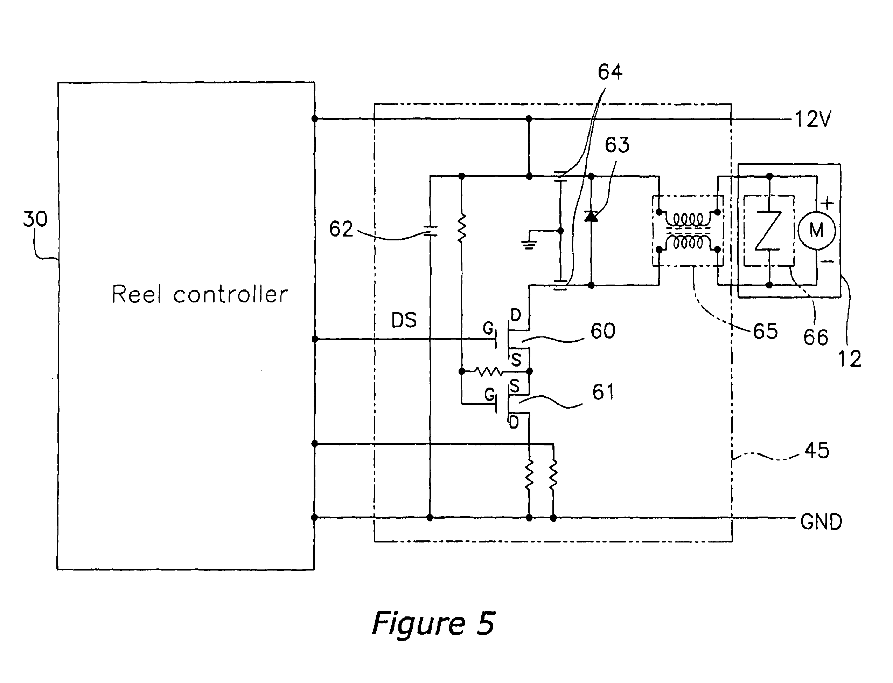

The PWM drive circuit 45 PWM drives the motor 12, and the duty ratio is controlled by means of drive pulse signals DS to variably drive the speed or the torque of the motor 12. The drive pulse signals DS modify the pulse widths having a frequency FQ that are output from the reel controller 30. As shown in Fig. 5, the motor 12 has a noise reducing varistor 66 built therein.

As shown in Fig. 5, the PWM drive circuit 45 includes a power-MOS type of field effect transistor (MOSFET) 60 having a drain that is connected to the minus terminal of the motor 12, a power-MOS type of field effect transistor (MOSFET) 61 having a source that is connected to the source of the field effect transistor 60, and a condenser 62. The plus terminal of the motor 12 is connected to the plus electrode of a power source. A backflow prevention diode 63, a pair of noise reducing three terminal condensers 64, and a noise reducing choke coil 65 are connected in parallel between the plus terminal and the minus terminal of the motor 12. The ground terminals of the pair of three terminal condensers 64 are connected to ground.

The case of the field effect transistor 60 is connected to the reel controller 30, and the drive pulse signals DS of the frequency FQ are applied from the reel controller 30. The field effect transistor 60 changes the voltage that is supplied to the motor 12 by means of the pulse width, i.e., by means of the drive pulse signals DS whose time in the "on" state are controlled to be between 0 and 100%. The field effect transistor 61 is provided in order to prevent trouble when the terminals of the power supply cord 18 are connected to a power supply backward. One terminal of the condenser 62 is connected to the plus electrode of a power source, and the other terminal of the condenser 62 is connected to ground. The condenser 62 is, for example, a multilayer ceramic condenser. With an electrolytic capacitor, a large capacity may be needed, and thus the size of the circuit/device may increase, when the heat output thereof is controlled to the point where damage will not occur. However, with a multilayer ceramic condenser, even if the capacity thereof is small and heat is generated thereby, the size of the circuit/device can be prevented from enlargement and damage thereto will rarely occur. The condenser 62 is provided in order to smooth the voltage supplied to the motor 12 that is turned on and off by the field effect transistor 60, prevents unneeded electrical power from being supplied to the motor 12, and reduces the amount of heat generated.

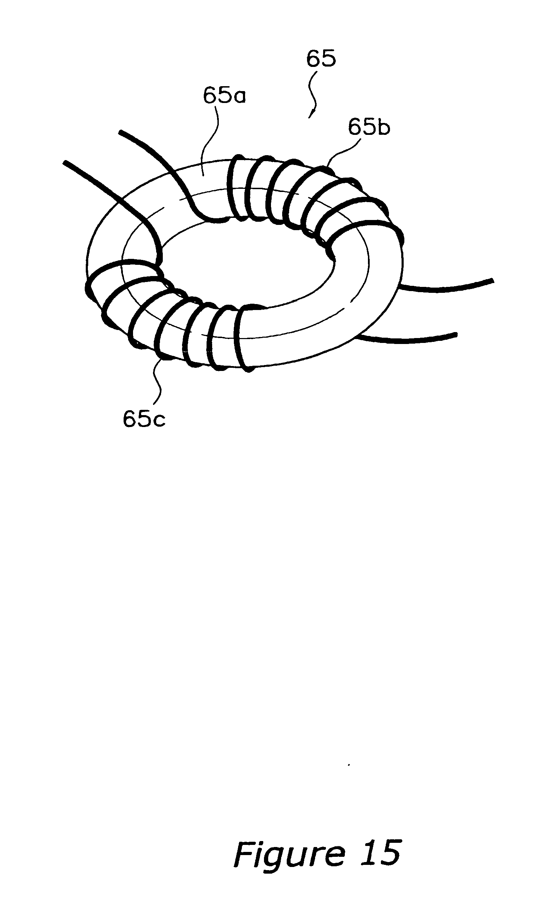

The choke coil 65 is provided in the PWM drive circuit 45, and is connected in parallel with the motor 12. The choke coil 65 is a noise reduction element that reduces the noise of the motor 12. As shown in Fig. 15, the choke coil 65 is a member in which coils 65b, 65c are each wound in opposite directions on each half of a donut-shaped ferrite coil 65a having a circular cross-section, and eliminates the noise of the motor 12 by adjusting the waveform of the electric current.

The varistor 66 is build into the motor 12, and is connected in parallel with the terminals of the motor 12. The varistor 66 is a noise reduction element that reduces the noise of the motor 12. The varistor 66 includes characteristics in which the resistance value is quickly reduced when a voltage that exceeds a predetermined value is applied, and thus absorbs a high surge in the voltage of the motor 12 and the noise thereof.

The memory 46 is formed from a non-volatile memory such as, for example, an EEPROM or the like. As shown in Fig. 4, the memory 46 includes a display data storage area 50 that records display data such as the location of fish, a learning data storage area 51 that stores learning data that expresses the relationship between the actual length of the fishing line and the number of rotations of the spool, a speed data storage area 52 that stores the upper limit of the winding speed (rpm) of the spool 10 in accordance with the speed level SC, a tension data storage area 53 that stores the duty ratio of the motor 12 in accordance with, for example, 10 line winding diameters for each of 5 tension levels, and a data storage area 54 that stores various other data.

For example, when the speed level SC is 1, the upper limit of the speed data SS = 257 rpm; when the speed level is 2, the upper limit of the speed data SS = 369 rpm; when the speed level is 3, the upper limit of the speed data SS = 503 rpm; when the speed level is 4, the upper limit of the speed data SS = 665 rpm; and when the speed level is 5, the upper limit of the speed data SS is 1000 rpm. These values are respectively stored in the speed data storage area 52. In addition, the tension data storage area 53 stores duty ratio data that corresponds to the plurality of line winding diameters for each tension level between the diameter of the spool bobbin and the maximum diameter of a spool fully wound with fishing line. For example, the values of 10 levels are stored in the tension data storage area 53 between the diameter of the spool bobbin and the maximum diameter of a spool fully wound with fishing line for each of the 5 tension levels TC, and the duty ratio (%) TS = 17-25 at when the tension level TC is 1, TS = 27-40 at tension level 2, TS = 40-60 at tension level 3, TS = 53-80 at tension level 4, and TS = 67-100 at tension level 5.

The values of these duty ratios are determined based upon measurement results obtained by measuring the duty ratios at the spool bobbin diameter and the maximum diameter of a spool fully wound with fishing line just before the spool 10 stops when 5 levels of tension are respectively applied thereto. More specifically, the two duty ratios at the spool bobbin diameter and the maximum diameter of a spool fully wound with fishing line when the same level of tension is applied thereto allows the relationship between the duty ratio and the diameter of a spool wound with fishing line to approximate a liner function, allows the duty ratios in between these two points at the plurality of line winding diameters to be calculated from the approximated liner function, and allows the duty ratios that correspond to each line winding diameter to be stored.

Various temporary data such as the speed level SC or the tension level TC that was set are stored in the data storage area 54.

Next, a summary of the method used to calculate the length of the fishing line in the present embodiment will be described.

In the present invention, the length of the fishing line L can be calculated by approximating the relationship between the length of the fishing line Y per 1 rotation of the spool and the number of rotations of the spool X into a straight line.

It is assumed that a fishing line whose thickness and total length is unknown is wound in layers onto the spool 10 from a line winding diameter B mm, and the fishing line is completely wound onto the spool 10 with c rotations. Next, it is assumed that the spool 10 will rotate d times when S mm of fishing line is released from the spool 10 in this state.

The relationship between the number of spool rotations X and the length of fishing line Y per one rotation of the spool is expressed by the following formula, where the horizontal axis is the number of spool rotations X, the vertical axis is the length of the fishing line per one rotation of the spool, and A is the slope of a straight line.

$$Y = AX + B\pi \quad (1)$$

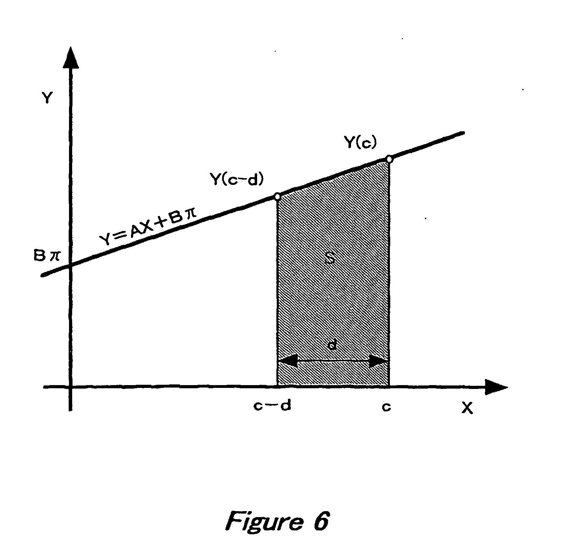

A graph showing the relationship between the number of spool rotations X and the length of fishing line Y per one rotation of the spool is shown in Fig. 6.

In addition, Y(c) is the length of fishing line per one rotation of the spool when spool 10 rotates c times, Y(c-d) is the length of fishing line per one rotation of the spool when the fishing line is wound up for c rotations and the spool 10 is then rotated d times to release a predetermined length of fishing line S, and are expressed by the following formulas.

$$Y(c) = A \cdot c + B\pi \quad (2)$$

$$Y(c-d) = A \cdot (c-d) + B\pi \quad (3)$$

In the graph shown in Fig. 6, the trapezoid shaped area shown with hatching corresponds to the length S of fishing line released after the line winding was completed, and thus the length S of fishing line released is expressed as follows.

$$S = d \cdot \{Y(c) + Y(c-d)\} / 2 \quad (4)$$

If formulas (2), (3) are substituted into formula (4), then

$$S = d \cdot \{A \cdot c + B\pi + A \cdot (c-d) + B\pi\} / 2$$
$$= d \cdot \{A \cdot (2c-d) + 2B\pi\} / 2 \quad (5)$$

If formula (5) is solved for slope A, then

$$A = 2(S - B\pi d) / d(2c-d) \quad (6)$$

Thus, the slope A of the straight line can be determined by substituting the four data S, B, c, and d into Formula (6).

For example, if the spool 10 completed 2000 rotations from the point that the line winding began, and from this point the spool 10 rotated 60 times when 10 m of line was released, and the diameter of the bobbin of the spool 10 was 30 mm, then the slope A of the straight line is determined as shown below.

$$A = 2(10000 - 94.2 * 60) / 60(2 * 2000 - 60)$$
$$= 0.0368$$

If a straight line that approximates the slope A and the intercept Bπ can be determined, then for example line lengths L1 to LN will be determined for each rotation of the spool from the beginning of line winding to the completion of line winding by integrating (calculating the area of) the straight line (linear function) for each rotation of the spool. Then, the water depth LX will be set to zero when the line winding and the number of spool rotations c are completed, the relationship between the number of spool rotations X and the water depth LX (=LN) from the completion point until line winding begins will be calculated, and this data will be stored in the learning data storage area 51 of the memory 46 in map format (LX=MAP(X)).

When the spool 10 is rotated during actual fishing, the line length LX will be read from the map in the memory 46 based upon the number of spool rotations X detected by the spool sensor 41, and the water depth of the tackle (water depth of the tip of the fishing line) will be displayed on the display 5 based upon the line length LX read.

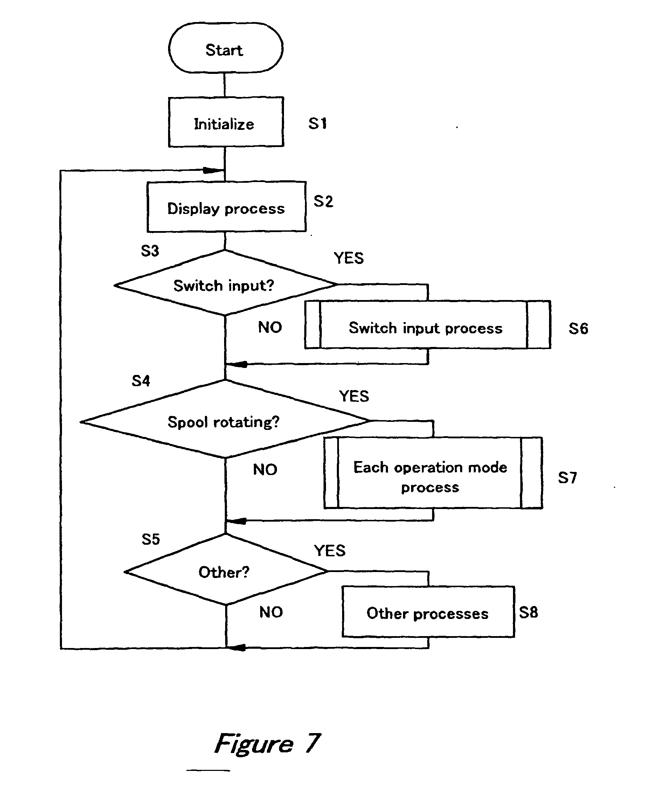

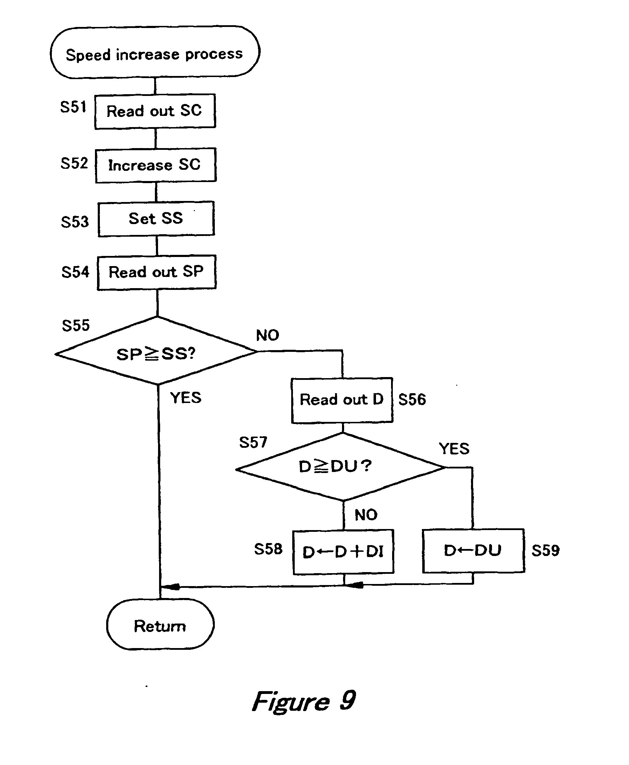

Next, the specific control processes that are performed by the reel controller 30 are described in the control flowcharts of Figs. 7 to 14.

When the motor driven reel is connected to an external power source via the power supply cord, initialization will be performed in Step S1 of Fig. 7. In this initialization step, the count value for the spool counter 42 will be reset, various variables and flags will be reset, the motor control mode will be set to speed mode, and the display mode will be set to the "from above" mode.

Next, display processes are performed in Step S2. Here, various display processes such as the water depth display and the like are performed. When in speed mode, the speed level set by means of the motor state change lever 32 is displayed in the speed level display area 5c, and when in tension mode, the tension level is displayed in the tension level display area 5e. In addition, the control mode, i.e., either the speed mode or the tension mode, are displayed.

In Step S3, it is determined whether or not any of the switches of the operation switch 6, the motor switch 31, or the motor state change lever 32 have been operated. In Step S4, it is determined whether or not the spool 10 is rotating. This determination is determined by means of the output of the spool sensor 41. In Step S5, it is determined whether or not other commands or input have been performed.

If a switch has been pushed, the process moves from Step S3 to Step S6, and a switch input process is executed. If rotation of the spool 10 has been detected, the process moves from Step S4 to Step S7. In Step S7, each operation mode process is executed. If other commands or input have been performed, the process moves from Step S5 to Step S8 and other processes are executed.

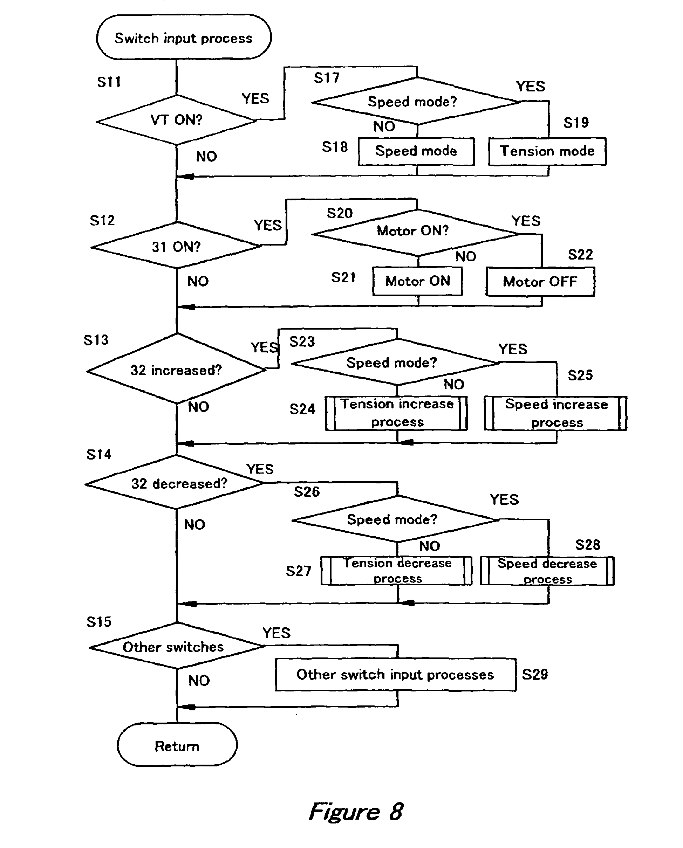

In the switch input process of Step S6, it is determined in Step S11 of Fig. 8 whether or not the mode switch MD has been pressed. In Step S12, it is determined whether or not the motor switch 31 has been pressed. In Step S13, it is determined whether or not the motor state change lever 32 has been moved to the increase side. In Step S14, it is determined whether or not the motor state change lever 32 has been moved to the reduce side. In Step S15, it is determined whether or not other switches have been operated. Operation of these other switches include various operations in the menu mode.

When the mode switch MD is pushed, the process moves from Step S11 to Step S17. In Step S17, it is determined whether or not the motor control mode is in the speed mode. Pushing the mode switch MD while in speed mode means that the fisherman is attempting to enter the tension mode, and thus the process moves to Step S19 and the control mode is set to tension mode. This allows torque control to be performed in response to the operation of the change switch SK. When in the tension mode rather than the speed mode, the process moves from Step S17 to Step S18, and the motor control mode is set to speed mode.

When the motor switch 31 is pushed, the process moves from Step S12 to Step S20. In Step S20, it is determined whether or not the motor 12 is already ON, i.e., whether or not the motor 12 is rotating. Pushing the motor switch 31 during motor rotation means that the fisherman is attempting to stop the motor 12, and thus the process moves to Step S22 and the motor 12 is turned OFF. If the motor is stopped, then the process moves from Step S20 to Step S21 and the motor 12 is turned ON.

If the motor state change lever 32 is moved to the increase side, the process moves from Step S13 to Step S23. In Step S23, it is determined whether or not the control mode is in the speed mode. When in the speed mode, the process moves to Step S25 and a speed increase process described below is performed. When in the tension mode, the process moves from Step S23 to Step S24, and a tension increase process described below is performed. Here, the speed increase process or tension increase process will be performed when the motor state change lever 32 is moved to the increase side, and thus as a result these increase processes will be performed only during the time the motor state change lever 32 is on the increase side.

If the motor state change lever 32 is moved to the decrease side, the process moves from Step S14 to Step S26. In Step S26, it is determined whether or not the control mode is in the speed mode. When in the speed mode, the process moves to Step S28 and a speed decrease process described below is performed. When in the tension mode, the process moves from Step S26 to Step S27, and a tension decrease process described below is performed. Here too, the speed decrease process or tension decrease process will be performed when the motor state change lever 32 is moved to the decrease side, and thus as a result these decrease processes will be performed only during the time the motor state change lever 32 is on the decrease side.

If other switch inputs occur, then the process moves from Step S15 to S29, and, for example, other switch input processes are performed in response to the switch input, such as setting the current water depth as the bottom of the location where fish are located.

In the speed increase process of Step S25, the previously set speed level SC is read out from the data storage area 54 in Step S51 of Fig. 8. Here, the value of the speed level SC that is to be increased or decreased is stored in the data storage area 54. In addition, when a power source is connected and when the motor switch 31 is pushed to stop the motor 12, the speed level SC is set to "0", and stored in the data storage area 54.

In Step S52, the speed level SC read out is increased by one level. The speed level SC increased here is displayed on the speed level display area 5c in the display process, and is stored in the data storage area 54. Note that immediately after the motor switch 31 is pushed, the speed level SC will increase by one level and be set to "1". In addition, if the speed level SC is set to "5", then it will not be increased to a higher level.

In Step S53, the speed data SS that corresponds to the increased speed level SC is read out from the speed data storage area 52 and set. In Step S54, speed data SP of the spool 10 output from the spool sensor 41 is read in.

In Step S55, it is determined whether or not the speed data SP read in is equal to or greater than the speed data SS corresponding to the set speed level SC. When the speed data SP is lower than the speed data SS, the process moves from Step S55 to Step S56. In Step S56, the current duty ratio D is read out from the data storage area 54. Whenever the duty ratio D is set, the set duty ratio D is stored in the data storage area 54.

In Step S57, it is determined whether or not the current duty ratio D read out from the data storage area 54 is equal to or greater than a maximum duty ratio DU. The maximum duty ratio DU is normally "100", but the setting for the maximum duty ratio DU may be changed in response to the speed level SC or the load on the motor 12. When the duty ratio D is less than the maximum duty ratio DU, the process moves from Step S57 to Step S58, and the duty ratio D is increased a predetermined increment DI and set. A drive pulse signal DS that corresponds to the set duty ratio is output to the PWM drive circuit 45. The newly set duty ratio D is stored in the data storage area 54. Note that the increment DI is, for example, "5". In Step S57, if it is determined that the duty ratio D is equal to or greater than the maximum duty ratio DU, then the process moves to Step S59. In Step S59, the duty ratio D is set to the maximum duty ratio DU. Then, a drive pulse signal DS that corresponds to the duty ratio set in Step S58 or Step S59 is output to the PWM drive circuit 45.

On the other hand, when it is determined that the speed data SP is equal to or greater than the speed data SS, nothing will be performed and the process will return to the switch input process. In addition, when the processes of Step S58 or Step S59 are completed, the process will return to the switch input process.

In this speed increase process, the speed level SC will be increased only when the motor state change lever 32 is moved to the increase side, and the speed of the spool 10 will increase up to the winding speed that corresponds to the increased speed level SC. In addition, when one stops moving the motor state change lever 32, the speed increase process or the speed decrease process will not be performed until the motor state change lever 32 is moved again, and thus the speed level SC resulting from the speed increase will be maintained and the winding speed will be maintained.

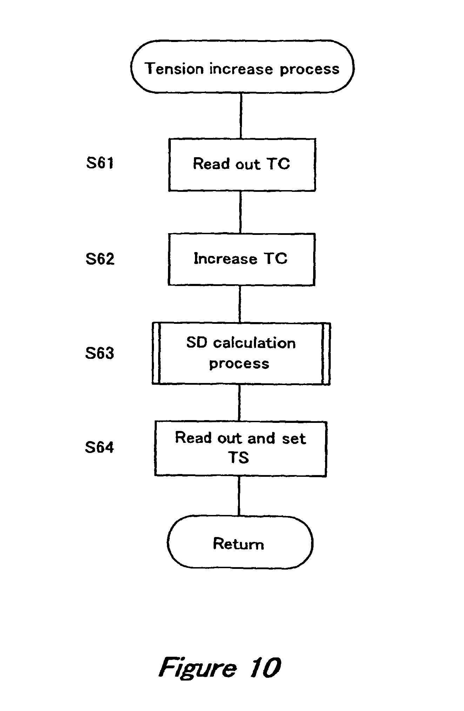

In the tension increase process of Step S24, rather than detecting the speed like in the speed mode and performing closed loop control that changes the duty ratio so as to achieve that speed, the duty ratio TS is set for each line winding diameter SD in each set tension level TC and open loop control is performed by means of this duty ratio TS. In the tension increase process, the previously set tension level TC is read out from the data storage area 54 in Step S61 of Fig. 10. Here, the value of the tension level TC that is to be increased or decreased is stored in the data storage area 54. In addition, when a power source is connected and when the motor switch PW is pushed to stop the motor 12, the tension level TC is set to "0", and stored in the data storage area 54.

In Step S62, the tension level TC read out is increased by one level. The tension level TC increased here is displayed on the tension level display area 5e in the display process, and is stored in the data storage area 54. Note that immediately after the motor switch 31 is pushed, the tension level TC will increase by one level and be set to "1". In addition, if the tension level TC is set to "5", then it will not be increased to a higher level.

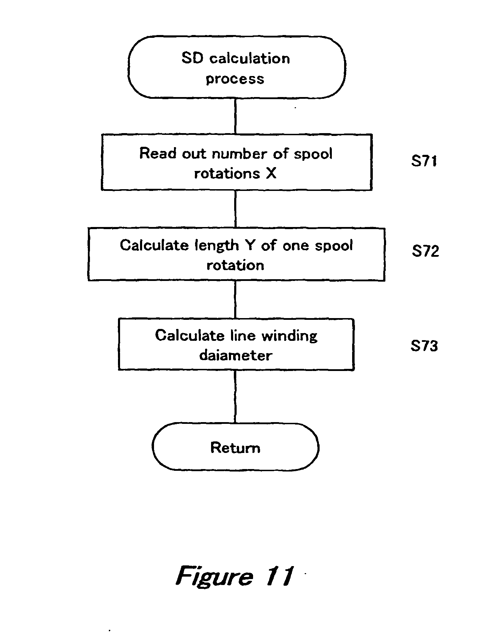

In Step S63, a process for calculating the line winding diameter SD will be performed. In the line winding diameter calculation process, the number of spool rotations X will be read in at Step S71 of Fig. 11. In Step S72, the number of spool rotations X is calculated, and the length Y of one spool rotation is calculated from a linear expression that expresses the relationship between the length Y of one spool rotation obtain by the learning process and the number of spool rotations X. In Step S73, the obtained length Y of one spool rotation is divided by n to calculate the line winding diameter SD.

In Step S64, the duty ratio TS that corresponds to the calculated line winding diameter SD and the increased tension level TC is read out from the data storage area 53 and set. Then, a drive pulse signal DS that corresponds to the set duty ratio TS is output to the PWM drive circuit 45. This allows the set duty ratio TS to be corrected by the line winding diameter SD, and the tension applied to the fishing line to be close to the tension that is usually set.

In the tension increase process, the tension level TC will be increased only during the time that the motor state change lever 32 is on the increase side, and a duty ratio TS that corresponds to the line winding diameter will be read out and set so as to achieve a tension that corresponds to the increased tension level TC. In addition, when one stops operating the motor state change lever 32, the tension increase process and the tension decrease process will not be performed until the motor state change lever 32 is operated again, and thus the tension level TC resulting from the tension increase will be maintained, and that tension will be maintained. As a result, the speed will slow when the load increases, and the speed will increase when the load decreases. Because of this, at times such as when tackle having a light load is reeled in, the tackle can be reeled in quickly and be returned to the fisherman quickly. Moreover, the tension applied to the fishing line will be fixed because a duty ratio TS that corresponds to the line winding diameter is set. Because of this, the tackle will rarely snap off during winding, the fish hook will rarely be detached from a fish during winding, and there will no longer be any need to adjust the drag.

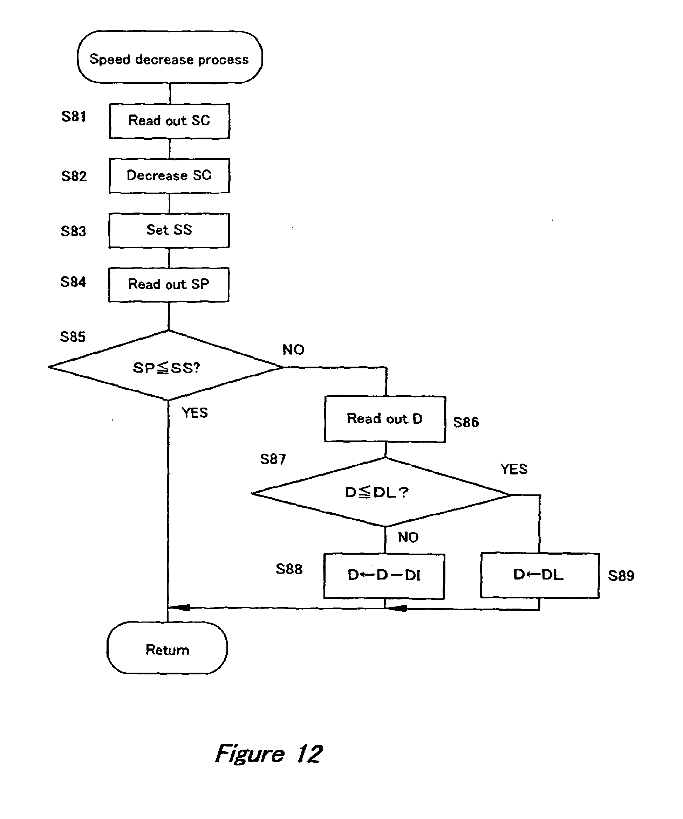

In the speed decrease process of Step S28, the previously set speed level SC is read out from the data storage area 54 in Step S81 of Fig. 12. In Step S82, the speed level SC read out is decreased by one level. The speed level SC decreased here is displayed on the speed level display area 5c in the display process, and is stored in the data storage area 54. Note that if the speed level SC is decreased to "1", then it will not be decreased to a lower level. In Step S83, the speed data SS that corresponds to the decreased speed level SC is read out from the speed data storage area 52 and set. In Step S84, speed data SP of the spool 10 output from the spool sensor 41 is read in.

In Step S85, it is determined whether or not the speed data SP read in is equal to or less than the speed data SS corresponding to the set speed level SC. When the speed data SP exceeds the speed data SS, the process moves from Step S85 to Step S86. In Step S86, the current duty ratio D is read out from the data storage area 54.

In Step S87, it is determined whether or not the current duty ratio D read out from the data storage area 54 is equal to or greater than a minimum duty ratio DL. This minimum duty ratio DL is normally "40". When the duty ratio D exceeds the minimum duty ratio DL, the process moves from Step S87 to Step S88, and the duty ratio D is decreased a predetermined decrement DI and set. The set duty ratio D is stored in the data storage area 54. Note that the decrement DI is, for example, "5". In Step S88, if it is determined that the duty ratio D is equal to or less than the minimum duty ratio DL, then the process moves to Step S89. In Step S89, the duty ratio D is set to the minimum duty ratio DL. Then, a drive pulse signal DS that corresponds to the duty ratio set in Step S88 or Step S89 is output to the PWM drive circuit 45.

On the other hand, if it is determined in Step S85 that the read in speed data SP is equal to or less than the speed data SS corresponding to the speed level SC, no processing will be performed and the process will return to the switch input process. In addition, when the processes of Step S88 or Step S89 are completed, the process will return to the switch input process.

In this speed decrease process as well, the speed level SC will be decreased only when the motor state change lever 32 is moved to the decrease side, and the winding speed of the spool 10 will decrease down to the winding speed that corresponds to the decreased speed level SC. In addition, when one stops moving the motor state change lever 32, the speed increase process or the speed decrease process will not be performed until the motor state change lever 32 is moved again, and thus the speed level SC resulting from the speed decrease will be maintained and the winding speed will be maintained.

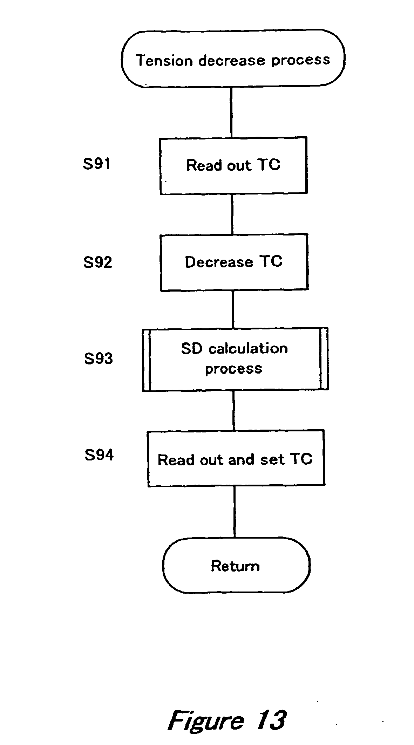

In the tension decrease process of Step S27, the previously set tension level TC is read out from the data storage area 54 in Step S91 of Fig. 13. Here, the value of the tension level TC that is to be increased or decreased is stored in the data storage area 54. In addition, when a power source is connected and when the motor switch PW is pushed to stop the motor 12, the tension level TC is set to "0", and stored in the data storage area 54.

In Step S92, the tension level TC read out is decreased by one level. The tension level TC decreased here is displayed on the tension level display area 5e in the display process, and is stored in the data storage area 54. Note that immediately after the motor switch 31 is pushed, the tension level TC will increase by one level and be set to "1". In addition, if the tension level TC is set to "1", then it will not be decreased to a lower level.

In Step S93, a process for calculating the line winding diameter SD will be performed. A description of this process will be omitted because it is identical to the line winding diameter calculation process shown in Fig. 11. In Step S94, the duty ratio TS that corresponds to the calculated line winding diameter SD and the decreased tension level TC is read out from the data storage area 53. Then, a drive pulse signal DS that corresponds to the set duty ratio TS is output to the PWM drive circuit 45. This allows the set duty ratio TS to be corrected by the line winding diameter SD, and the tension applied to the fishing line to be close to the tension that is usually set.

In the tension decrease process as well, the tension level TC will be decreased only during the time that the motor state change lever 32 is on the decrease side, and a duty ratio TS that corresponds to the line winding diameter will be read out and set so as to achieve a tension that corresponds to the decreased tension level TC. In addition, when one stops operating the motor state change lever 32, the tension increase process and the tension decrease process will not be performed until the motor state change lever 32 is operated again, and thus the tension level TC resulting from the tension decrease will be maintained, and that tension will be maintained. As a result, the speed will slow when the load increases, and the speed will increase when the load decreases. Because of this, at times such as when tackle having a light load is reeled in, the tackle can be reeled in quickly and be returned to the fisherman quickly. Moreover, the tension applied to the fishing line will be fixed because a duty ratio TS that corresponds to the line winding diameter is set. Because of this, the tackle will rarely snap off during winding, the fish hook will rarely become detached from the mouth of the fish during winding, and there will no longer be any need to adjust the drag.

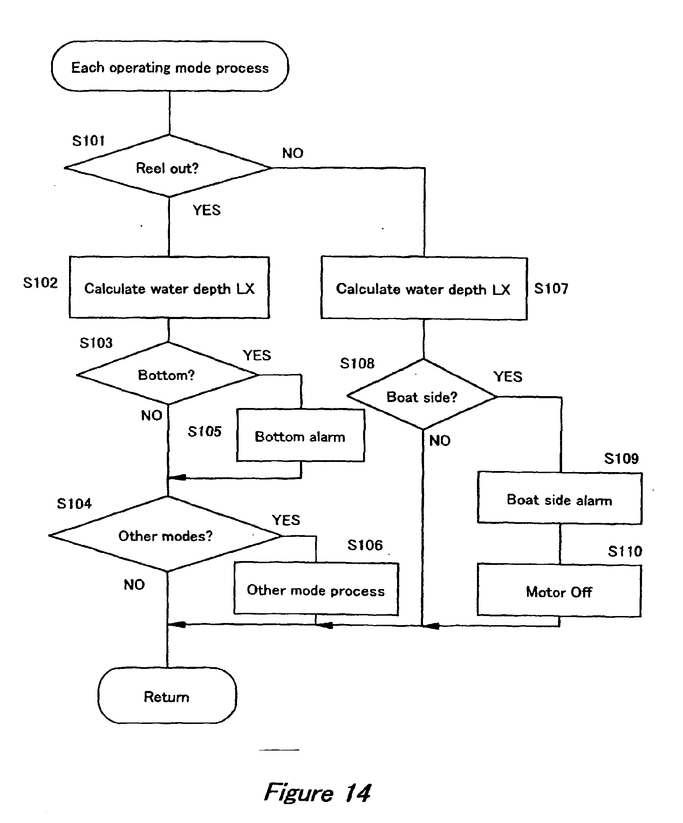

In each operation mode process of Step S7, it is determined in Step S101 of Fig. 14 whether or not the rotational direction of the spool 10 is in the line reel-out direction. This determination is made by determining which of either lead switches of the spool sensor 41 has generated a pulse first. If it is determined that the rotational direction of the spool 10 is the line reel-out direction, the process moves from Step S101 to Step S102. In Step S102, data stored in the memory 46 is read out from the number of spool rotations each time the number of spool rotations decrease, and the water depth is calculated. The water depth is displayed in the display process of Step S2. In Step S103, it is determined whether or not the obtained water depth matches the bottom position, i.e., whether or not the tackle has reached the bottom. The bottom position is set in the memory 46 by pushing the switch TB when the tackle reaches the bottom. In Step S104, it is determined whether or not there are other modes. When there are no other modes, each operation mode process is complete, and the process returns to the main routine.

If the water depth matches the bottom position, the process moves from Step S103 to Step S105, and the buzzer 44 sounds to notify one that the tackle has reached the bottom. When there is another mode, the process moves from Step S104 to Step S106, and the other selected mode is executed.

If it is determined that the rotational direction of the spool 10 is the line reel-in direction, the process moves from Step S101 to Step S107. In Step S107, data stored in the memory 46 is read out from the number of spool rotations each time the number of spool rotations decrease and the water depth is calculated. The water depth is displayed in the display process of Step S2. At Step S108, it will be determined whether or not the water depth matches a boat side stop position. If the fishing line has not be wound in up to the boat side stop position, the process returns to the main routine. If the fishing line has reached the boat side stop position, then the process moves from Step S108 to S109. In Step S109, the buzzer 44 sounds in order to alert one that the tackle is at the side of the boat. In Step S110, the motor is turned OFF. This allows a fish that has been caught to be placed in a position where it is easy to grasp. The boat side stop position is set, for example, when the water depth is 6 meters or less and the spool 10 is stopped in a predetermined period of time or greater.

With this type of motor driven reel, when the tension mode is selected by means of the mode switch MD, the motor 12 is controlled at a constant tension for each tension level. Because of this, the tackle will rarely snap off during winding, and the fish hook will rarely become detached from the fish during line winding. Moreover, because the tension is constantly controlled by open loop control, the duty ratio during control will not vary up or down, but will only gradually increase in accordance with the line winding diameter. Because of this, variation in the rotational speed of the spool during constant tension control can be held in check, wow and flutter noise can be held in check, and an increase in power consumption can be held in check. Moreover, the configuration of the control system can be simplified because it is not necessary to detect the current tension by using, for example, torque.

With this motor driven reel, the choke coil 65 is connected to the PWM drive circuit 45, and the varistor 66 is mounted on the motor 12. Because of this, even if noise is generated from the motor 12, the noise can be reduced by means of the choke coil 65 and the varistor 66. Furthermore, because the choke coil 65 and the varistor 66 are arranged in the circuit of the PWM drive circuit 45 and the motor 12, it will no longer be necessary to provide a shield in order to avoid the generation of noise as in the prior art, and because of this, malfunctions of the reel controller 30 can be reliably stopped. Thus, problems in external devices that are placed close to the reel will rarely occur.

*Other embodiments*

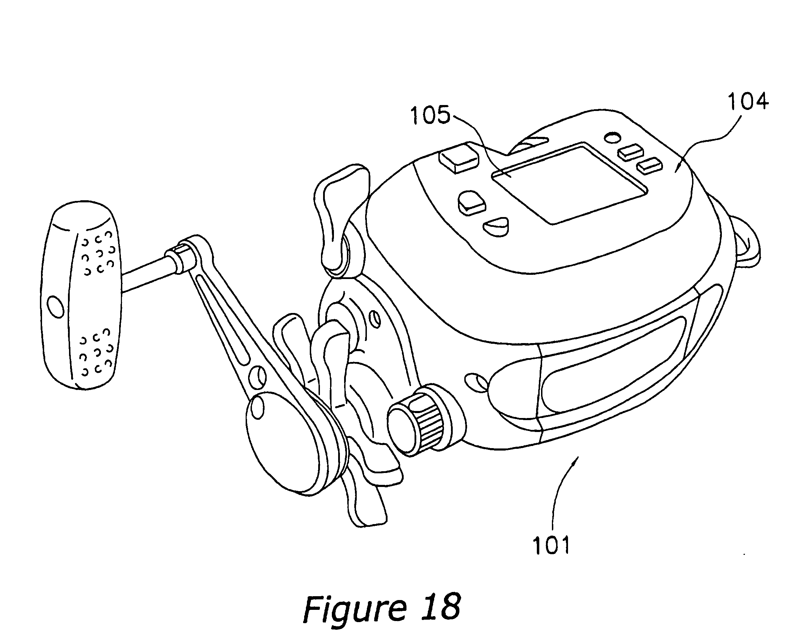

(a) In the aforementioned embodiment, a motor driven reel having an open/close type of water depth display device 4 that includes the first member 4a and the second member 4b was provided as an example. However, the present invention is not limited thereof. For example, as shown in Figure 18, the present invention may be applied to a motor control device of the motor driven reel 101 that includes a water depth display device having a display 105 on the upper surface thereof.

(b) In the aforementioned embodiment, the motor driven reel was configured so as to allow the speed to be controlled and the tension due to torque to be controlled, however the motor driven reel may be configured to allow only one of these two controls to be performed.

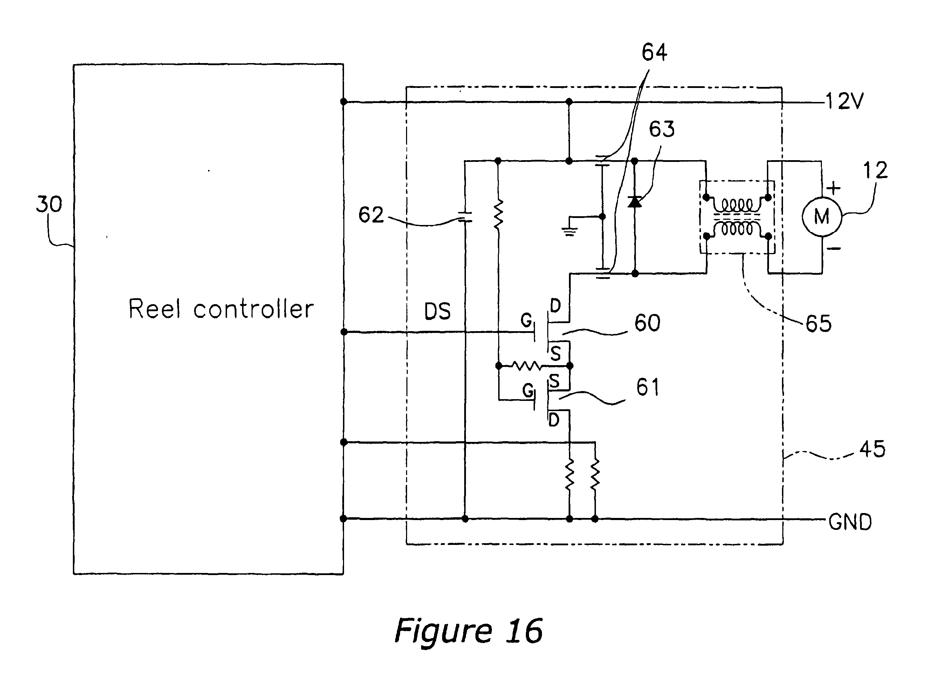

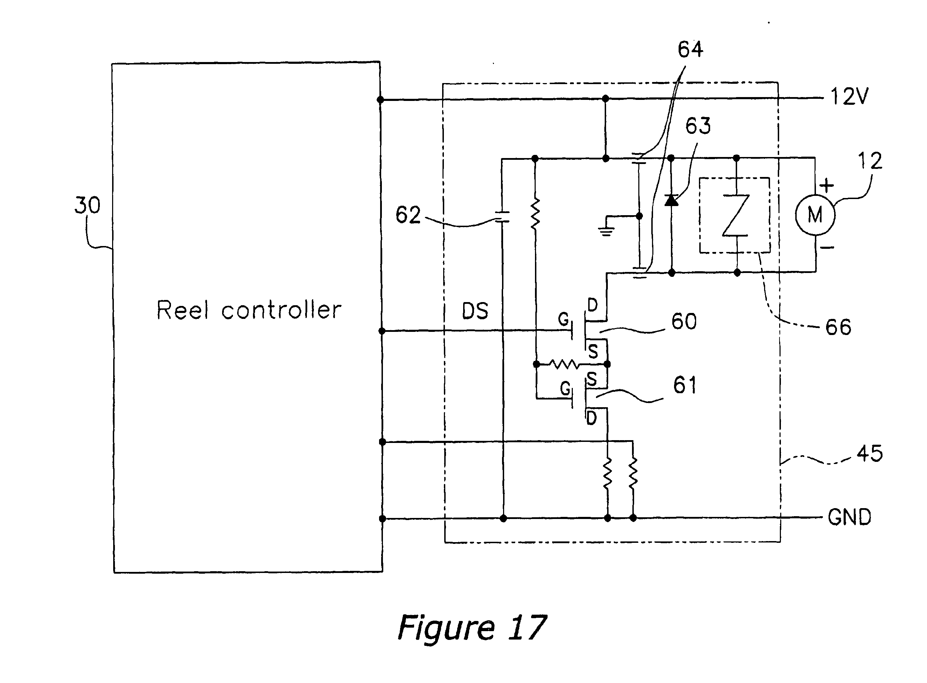

(c) In the aforementioned embodiment, the choke coil 65 is connected to the PWM drive circuit, and the varistor 66 is included in the motor 12. However, the present invention is not limited thereof. For example, the choke coil 65 may be connected to only the PWM drive circuit 45 shown in Fig. 16, or the varistor 66 may be connected to only the PWM drive circuit 45 shown in Fig. 17. In addition, a configuration in which three terminal condensers 64 are not connected to the PWM drive circuit 45 is also possible, and the three terminal condensers 64, the choke coil 65, and the varistor 66 can be connected at other locations. Note that other noise reducing elements other than the choke coil 65 and the varistor 66 may be employed, such as a surge absorber, a surge killer, or the like.

[Effects of the Invention]

According to the present invention, noise generated by means of the rotation of a motor can be reduced by providing a noise reduction element of a motor control device of a motor driven reel inside the motor or a motor drive. Because of this, problems with external devices placed near the motor driven reel will rarely occur.

As used herein, the following directional terms "forward, rearward, above, downward, vertical, horizontal, below, and transverse" as well as any other similar directional terms refer to those directions of a device equipped with the present invention. Accordingly, these terms, as utilized to describe the present invention should be interpreted relative to a device equipped with the present invention.

The term "configured" as used herein to describe a component, section or part of a device includes hardware and/or software that is constructed and/or programmed to carry out the desired function.

The terms of degree such as "substantially," "about," and "approximately" as used herein mean a reasonable amount of deviation of the modified term such that the end result is not significantly changed. For example, these terms can be construed as including a deviation of at least $\pm$ 5% of the modified term if this deviation would not negate the meaning of the word it modifies.

**Claims**

1. A motor control device for a motor driven reel that controls a motor (12) which rotates a spool (10) mounted on a reel unit (1), the motor control device comprising:

   a motor controller (30) that is arranged on the reel unit (1) and outputs drive signals to the motor (12); and
   a motor drive (45) that is connected to the motor (12) and the motor controller (30), and which drives the motor (12) in response to the drive signals output from the motor controller (30),
   wherein the motor control device further comprises a noise reduction element that is arranged on at least either the motor (12) or the motor drive (45) and which reduces motor noise.

2. The motor control device set forth in claim 1, wherein the noise reduction element is built into the motor (12).

3. The motor control device set forth in claims 1 or 2, wherein the noise reduction element is arranged in the motor drive (45), and is connected in parallel to the motor (12).

4. The motor control device set forth in any of claims 1 to 3, wherein the noise reduction element is a varistor (66) that is connected in parallel to the motor (12).

5. The motor control device set forth in any of claims 1 to 3, wherein the noise reduction element is a choke coil (65) that is connected in parallel to the motor (12).

6. The motor control device set forth in any of claims 1 to 3, wherein the noise reduction element is a condenser (62) in which one terminal thereof is connected to the motor (12) and another terminal thereof is connected to ground.

7. The motor control device set forth in any of claims 1 to 6, wherein the reel unit further includes a case member (4b) that accommodates at least either the motor controller (30) or the motor drive (45).

**Patentansprüche**

1. Eine Motorsteuerungsvorrichtung für eine motorangetriebene Rolle, die einen Motor (12), welcher eine auf einer Rolleneinhelt (1) montierte Spule (10) dreht, steuert, wobei die Motorsteuerungsvorrichtung Folgendes beinhaltet:

   eine Motorsteuereinheit (30), die auf der Rolleneinheit (1) angeordnet ist und Treibersignale an den Motor (12) ausgibt; und
   einen Motorantrieb (45), der mit dem Motor (12) und der Motorsteuereinheit (30) verbunden ist und der den Motor (12) als Reaktion auf die von der Motorsteuereinheit (30) ausgegebenen Treibersignale antreibt, wobei die Motorsteuerungsvorrichtung ferner ein Geräuschreduktionselement beinhaltet, das auf mindestens entweder dem Motor (12) oder dem Motorantrieb (45) angeordnet ist und das das Motorgeräusch reduziert.

2. Motorsteuerungsvorrichtung gemäß Anspruch 1, wobei das Geräuschreduktionselement in den Motor (12) eingebaut ist.

3. Motorsteuerungsvorrichtung gemäß Anspruch 1 oder 2, wobei das Geräuschreduktionselement in dem Motorantrieb (45) angeordnet und parallel zu dem Motor (12) geschaltet ist.

4. Motorsteuerungsvorrichtung gemäß einem der Ansprüche 1 bis 3, wobei das Geräuschreduktionselement ein Varistor (66) ist, der parallel zu dem Motor (12) geschaltet ist.

5. Motorsteuerungsvorrichtung gemäß einem der Ansprüche 1 bis 3, wobei das Geräuschreduktionselement eine Drosselspule (65) ist, die parallel zu dem Motor (12) geschaltet ist.

6. Motorsteuerungsvorrichtung gemäß einem der Ansprüche 1 bis 3, wobei das Geräuschreduktionselement ein Kondensator (62) ist, bei dem ein Terminal davon mit dem Motor (12) verbunden ist und ein anderes Terminal davon geerdet ist.

7. Motorsteuerungsvorrichtung gemäß einem der Ansprüche 1 bis 6, wobei die Rolleneinheit ferner eine Gehäusekomponente (4b) umfasst, die mindestens entweder die Motorsteuereinheit (30) oder den Motorantrieb (45) unterbringt.

**Revendications**

1. Un dispositif de commande de moteur destiné à un moulinet entraîné par moteur qui commande un moteur (12) qui fait tourner un tambour (10) monté sur un bloc moulinet (1), le dispositif de commande de moteur comprenant :

   un organe de commande de moteur (30) qui est disposé sur le bloc moulinet (1) et sort des signaux d'entraînement à l'intention du moteur (12) ; et
   un entraînement de moteur (45) qui est connecté au moteur (12) et à l'organe de commande de moteur (30), et qui entraîne le moteur (12) en réponse aux signaux d'entraînement sortis de l'organe de commande de moteur (30),
   dans lequel le dispositif de commande de moteur comprend de plus un élément de réduction de bruit qui est disposé sur au moins soit le moteur (12), soit l'entraînement de moteur (45) et qui réduit le bruit de moteur.

2. Le dispositif de commande de moteur exposé dans la revendication 1, dans lequel l'élément de réduction de bruit est intégré dans le moteur (12).

3. Le dispositif de commande de moteur exposé dans les revendications 1 ou 2, dans lequel l'élément de réduction de bruit est disposé dans l'entraînement de moteur (45), et est connecté en parallèle au moteur (12).

4. Le dispositif de commande de moteur exposé dans n'importe lesquelles des revendications 1 à 3, dans lequel l'élément de réduction de bruit est un varistor (66) qui est connecté en parallèle au moteur (12).

5. Le dispositif de commande de moteur exposé dans n'importe lesquelles des revendications 1 à 3, dans lequel l'élément de réduction de bruit est une bobine d'arrêt (65) qui est connectée en parallèle au moteur (12).

6. Le dispositif de commande de moteur exposé dans n'importe lesquelles des revendications 1 à 3, dans lequel l'élément de réduction de bruit est un condenseur (62) dans lequel un terminal de celui-ci est connecté au moteur (12) et un autre terminal de celui-ci est connecté à la terre.

7. Le dispositif de commande de moteur exposé dans n'importe lesquelles des revendications 1 à 6, dans lequel le bloc moulinet inclut de plus une unité formant boîtier (4b) qui accueille au moins soit l'organe de commande de moteur (30), soit l'entraînement de moteur (45).

Figure 1

5a                    5

            5b            5c

            Fish
    5d      position

    Tension mode 5        5e

Menu    Tension/Speed    Memo    6

        Exe.         |   ←  →

                        0 Set

        MN          MD      SM

*Figure 2*

## Figure 3

```
6                    30                      44
Operation ────────┐  ┌──────────┐  ┌──────── Buzzer
switches          │  │          │  │
                  │  │          │  │         45
31                │  │          │  ├──────── PWM drive circuit ──────┐
Motor switch ─────┤  │          │  │                                 │
                  │  │  Reel    │  │          5                      │
32                │  │controller│  ├──────── Display            ┌────┴─┐
Motor state change lever ──────┤  │          46                 │  M   │
                  │  │          │  ├──────── Memory              └──────┘
41                │  │          │  │                              12
Spool sensor ─────┤  │          │  │
                  │  │          │  │
42                │  │          │  └──────── Other input
Spool counter ────┘  └──────────┘            output parts
```

**Figure 3**

## Figure 4

```
46
┌──────┬─────────────────────────────────────┐
│      │  Fish position data storage area     │─── 50
│      ├─────────────────────────────────────┤
│      │                                      │
│      │  Learning data storage area          │─── 51
│      ├─────────────────────────────────────┤
│Memory│  Speed data storage area             │─── 52
│      ├─────────────────────────────────────┤
│      │  Tension data storage area           │─── 53
│      ├─────────────────────────────────────┤
│      │                                      │─── 54
│      │  Data storage area                   │
│      │                                      │
└──────┴─────────────────────────────────────┘
```

**Figure 4**

*Figure 5*

EP 1 483 964 B1

*Figure 6*

Start

Initialize — S1

Display process — S2

S3 Switch input? — YES → Switch input process — S6

NO

S4 Spool rotating? — YES → Each operation mode process — S7

NO

S5 Other? — YES → Other processes — S8

NO

*Figure 7*

*Figure 8*

*Figure 9*

Figure 10

Figure 11

Figure 12

Figure 13

```
         ╭─────────────────────────────╮
         │  Each operating mode process │
         ╰─────────────────────────────╯
                        │
    S101              ╱─╲
              ╱───────────────╲      NO
             ╱     Reel out?    ╲──────────────────┐
             ╲                  ╱                   │
              ╲───────────────╱                    │
                    │ YES                           │
                    │                               │
  S102  ┌────────────────────────┐   ┌────────────────────────┐
        │ Calculate water depth LX│   │ Calculate water depth LX│ S107
        └────────────────────────┘   └────────────────────────┘
                    │                               │
    S103          ╱─╲            YES      S108     ╱─╲          YES
           ╱─────────────╲──────────┐        ╱──────────────╲─────────┐
          ╱   Bottom?     ╲         │       ╱   Boat side?   ╲         │
          ╲               ╱         │       ╲                ╱         │
           ╲─────────────╱          │        ╲──────────────╱         │
                │ NO        ┌──────────────┐       │ NO          S109 │
                │    S105   │ Bottom alarm │       │      ┌────────────────────┐
                │           └──────────────┘       │      │  Boat side alarm   │
                │◄──────────────────┘              │      └────────────────────┘
    S104      ╱─╲                                  │             │      S110
       ╱─────────────╲       YES                   │      ┌────────────────────┐
      ╱ Other modes?  ╲───────────┐                │      │     Motor Off      │
      ╲               ╱           │  S106          │      └────────────────────┘
       ╲─────────────╱     ┌────────────────────┐  │             │
            │ NO           │ Other mode process │  │             │
            │◄─────────────└────────────────────┘──┴─────────────┘
      ╭──────────╮
      │  Return  │
      ╰──────────╯
```

*Figure 14*

Figure 15

Figure 16

EP 1 483 964 B1

*Figure 17*

EP 1 483 964 B1

*Figure 18*

EP 1 483 964 B1